# EUROPEAN PATENT APPLICATION

(11) **EP 1 585 055 A2**
(43) Date of publication of application: **12.10.2005**
(21) Application number: 05251211.8
(22) Date of filing: 01.03.2005
(51) Int. Cl.: G06K 9/20, G07C 9/00

(54) **A method of focusing a fingerprint image and a fingerprint sensing device**

(30) Priority: 31.03.2004 GB 0407338
(71) Applicant: SEIKO EPSON CORPORATION, Tokyo 163-0811 (JP)
(72) Inventor: Payne, Robert, Epson Europe Electronics Gmbh, The Alba Campus, Livingston EH54 7EG (GB); Rajalingham, P., Epson Europe Electronics Gmbh, The Alba Campus, Livingston EH54 7EG (GB)
(74) Representative: Kenyon, Sarah Elizabeth

(57) **Abstract**

Current methods of focusing fingerprint sensors are typically slow and have difficulties in quickly and accurately focusing upon a fingerprint image. The present invention relates to a method of focusing a fingerprint image. The method obtains a partial fingerprint image, adjusts a control parameter value to obtain a focused partial fingerprint image, sets the adjusted focused control parameter value as a focused control parameter value and then obtains a focused full fingerprint image. The present invention also relates to a fingerprint sensing device which is capable of partially scanning a fingerprint image. The fingerprint sensing device comprises a sensing array having a plurality of sensing elements, the sensing array for detecting the ridges and troughs of a fingerprint located on a contact surface of the sensing array. The fingerprint sensing device also comprises a controller being capable of selecting at least one of the sensing elements to form a partial fingerprint image, and a sensing circuit for determining if the selected sensing element or elements are on or off.

## Description

The present invention relates to a method of focusing a fingerprint image. More preferably the present invention relates to a method of focusing a detected fingerprint image by obtaining a partial scan of the fingerprint image, adjusting a control parameter to focus the partial fingerprint image and then obtaining a full fingerprint image. In addition, the present invention also relates to a fingerprint sensing device.

Many security systems exploit the bio-metric data of a human user to enhance the security of the system. Bio-metric data includes all forms of physical identification information. For example, bio-metric data may include, but not exclusively, fingerprints, iris patterns, voice patterns, facial features, DNA coding, blood type, ear prints etc. Bio-metric data can be used in many security systems, such as premises access security systems and personal property security systems etc, to prevent a non-authorised user from accessing premises or using personal property. Examples of personal property in which such bio-metric data can be utilised are mobile telephones, personal computers (PCs), personal digital assistants (PDAs) and Smart Cards.

Fingerprints comprise a plurality of characteristics such as ridges, troughs and minutiae points which can be extracted from a fingerprint image. Minutiae points are bifurcations, the point at which a ridge branches, and terminals, the point at which a ridge ends. The distribution of the characteristics of a fingerprint vary for each human user. Since no two humans have the same fingerprint, such bio-metric data is extremely specific. Consequently, the use of bio-metric data such as fingerprints in security systems can be extremely accurate and effective in protecting the premises or personal property etc.

There are two main types of fingerprint sensors, (i) optical based fingerprint sensors and (ii) non-optical based fingerprint sensors.

One example of an optical based fingerprint sensor is disclosed in European Patent Publication No. 0457398A2 (*Philips Electronic and Associated Industries Limited*). EP 0457398A2 describes an optical fingerprint sensing device comprising a glass prism having total internal reflection. Light is directed through one face of the prism, reflected at a second face of the prism and output from a third face of the prism. When a finger is placed on the second face (the contact surface), the locations at which the ridges of the fingerprint are in contact with the glass do not reflect light. However, light is reflected at the locations where the troughs of the fingerprint are present. Consequently, the light output from the third face of the prism corresponds to the characteristics of the fingerprint.

It is well known in the art that optical based fingerprint sensors are vulnerable to fraudulent use. This is because a photograph of a fingerprint can be used instead of the actual fingerprint and will produce the same results. Additionally, the contact surface must be kept clean and free from dirt and grease or a corrupt fingerprint image will be produced.

One example of a non-optical based fingerprint sensor is also disclosed in EP 0457398A2. EP 0457398A2 describes a capacitance type fingerprint sensing device comprising an active matrix of sensing elements, each element comprising a sensing electrode and a field effect transistor (FET). When a finger is placed on a contact surface of the sensing device, the ridges of the fingerprint are in actual or close contact with the contact surface, whilst the troughs of the fingerprint are spaced away from the contact surface. Each sensing element and a corresponding part of the fingerprint form opposing plates of a capacitor. The capacitance of each capacitor varies due to the distance between the contact surface and the corresponding part of the fingerprint. Larger capacitance occurs when the ridges of the fingerprint are in actual or close contact with the contact surface, whilst smaller capacitance occurs when the troughs of the fingerprint overlay the contact surface. These variations in capacitance are used to produce an image of the fingerprint.

Another example of a non-optical based fingerprint sensor is disclosed in US Patent Publication No. 2002/0163601 (*Min et al*.). US 2002/0163601 describes a thin film transistor (TFT) type fingerprint sensing device comprising a controller and a sensor array having a plurality of sensing elements. Each sensing element includes a TFT light sensing unit, a TFT switching unit, and a backlight. When a finger is placed on a contact surface of the sensing device, the backlight applies light to the fingerprint. The light is reflected by the fingerprint, more light being reflected by the ridges of the fingerprint than the troughs of the fingerprint. The reflected light is received by the TFT light sensing unit causing electricity to flow. If the amount of electricity is sufficient, then the TFT switching unit is turned on. The TFT switching unit, within each sensing element is only turned on when the corresponding portion of the fingerprint comprises a ridge. The TFT switching unit is not turned on if the corresponding portion of the fingerprint comprises a trough. Consequently, the array of on and off sensing elements can be used to produce an image of the fingerprint.

A fingerprint sensing device must obtain a clear fingerprint image. This is because a clear fingerprint image is critical to the success of bio-metric recognition algorithms which are applied to a fingerprint image, after sensing, to identify a user as an authorised or non-authorised user. Bio-metric recognition algorithms are disclosed in "Handbook of Fingerprint Recognition" by Davide Maltoni.

For a non-optical based sensor to produce a clear image, a number of parameters need to be controlled. These parameters include, but are not limited to, the reference signals used to distinguish between an on sensing element and an off sensing element and the charge/discharge time required for the capacitance to be measured in a capacitance type fingerprint sensing device. These parameters must be adjusted each time the sensor is used. The parameters must be adjusted as they depend on external factors such as humidity, the pressure applied by a finger on the sensor, and the temperature of the skin of a finger.

The temperature of the skin of a human user varies from user to user. Additionally, most users have drier skin during cold weather. These variations effect the results produced by fingerprint sensing devices as dry skin contacts a contact surface of a sensing device at fewer locations then moist skin. Thus, if the parameters are not adjusted to compensate for external factors, then corrupt results may be obtained.

Furthermore, the image frame rate of a capacitance type fingerprint sensing device may be slow when compared to other fingerprint sensing devices. As a finger is often only placed on a contact surface of a sensing device for a very short period of time, only very short periods of time are available in which the parameters can be adjusted and a clear image obtained.

The present invention aims to overcome the above mentioned problems by providing a method of focusing a fingerprint image obtained by a fingerprint sensing device. The method comprising: (a) obtaining a partial fingerprint image; (b) adjusting a control parameter value to obtain a focused partial fingerprint image; (c) setting the adjusted focused control parameter value as a focused control parameter value; and (d) obtaining a focused full fingerprint image.

Furthermore, the present invention aims to overcome the above mentioned problems by providing a fingerprint sensing device comprising: a sensing array having a plurality of sensing elements, the sensing array for detecting ridges and troughs of a fingerprint located on a contact surface of the sensing array; a controller coupled to the sensing array, the controller being capable of selecting at least one of the plurality of sensing elements to form a partial fingerprint image; and a sensing circuit coupled to the sensing array and the controller, the sensing circuit for determining if the selected sensing element or elements are on or off.

The method and apparatus of the present invention reduces the time period within which a finger must be applied to a contact surface of a sensing device in order to obtain a fingerprint image, and increases the quality of the obtained fingerprint image. The increase in quality of the obtained fingerprint image increases the accuracy of bio-metric recognition algorithms which are applied to the fingerprint image, after sensing. Additionally the increase in quality of the obtained fingerprint image reduces the post-processing of the fingerprint image required prior to a bio-metric recognition algorithm being applied to the fingerprint image.

Embodiments of the present invention will now be described by way of further example only and with reference to the accompanying drawings, in which:
Figure 1 illustrates a fingerprint sensing device of the present invention;
Figure 2 illustrates a full scan of a sensor array;
Figure 3 illustrates a partial scan of a sensor array;
Figure 4 illustrates a flow chart of a method of a first embodiment of the present invention;
Figure 5 illustrates a flow chart of a method of a second embodiment of the present invention;
Figure 6 illustrates a schematic view of a mobile personal computer incorporating a method and apparatus of the present invention;
Figure 7 illustrates a schematic view of a mobile telephone incorporating a method and apparatus of the present invention; and
Figure 8 illustrates a schematic view of a digital camera incorporating a method and apparatus of the present invention.

The method and apparatus of the present invention can be utilised by any fingerprint sensing device where parameters must be set prior to use of the fingerprint sensing device. In particular the method and apparatus of the present invention can be utilised by TFT type fingerprint sensing devices and capacitance type fingerprint sensing devices.

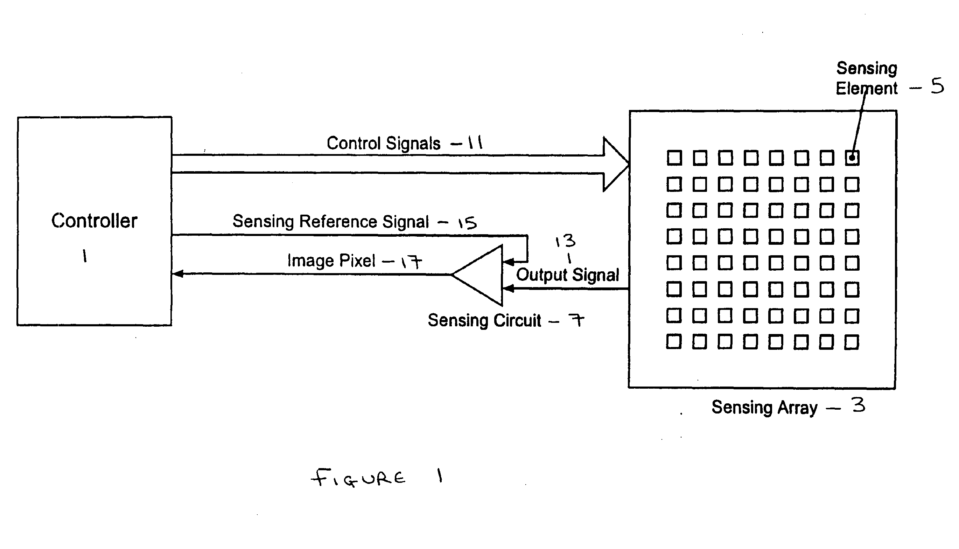

A non-optical fingerprint sensing device of the first embodiment of the present invention is illustrated in figure 1. The fingerprint sensing device comprises a controller 1, a sensing array 3, having a plurality of sensing elements 5 and a sensing circuit 7. The controller 1, sensing array 3 and sensing circuit 7 may be incorporated onto one sensor, alternatively, some of the components may be implemented externally to the sensor.

The sensing device also comprises a contact surface, positioned above the sensing array 3, which is not illustrated in figure 1. When a finger is placed on the contact surface, the sensing elements 5, within the sensing array 3, can be utilised to determine, by methods well known in the art, whether the corresponding portion of the fingerprint which is placed above each sensing element 5 comprises a ridge or a trough. The method used to determine if the corresponding portion of the fingerprint comprises a ridge or a trough will depend on whether the fingerprint sensing device is a TFT type fingerprint sensing device or a capacitance type fingerprint sensing device etc.

When a finger is placed on the contact surface, the controller 1 generates control signals 11 to activate some of the plurality of sensing element 5 within the sensing array 3 for analysis. The control signals 11 also instruct each of the activated sensing elements 5 to output a signal 13 which can be used to determine if the corresponding portion of the fingerprint comprises a ridge or a trough.

Unlike the prior art, the controller 1, of the present invention, is not limited to selecting all of the plurality of sensing elements 5 for analysis at any one time. Consequently, it is not necessary to always activate all of the plurality of sensing element 5, within the sensing array 3, to complete a full scan of the sensing array 3 and thus a full scan of the fingerprint, as is necessary with fingerprint sensing devices of the prior art. A full scan of the sensing array 3 is illustrated in figure 2.

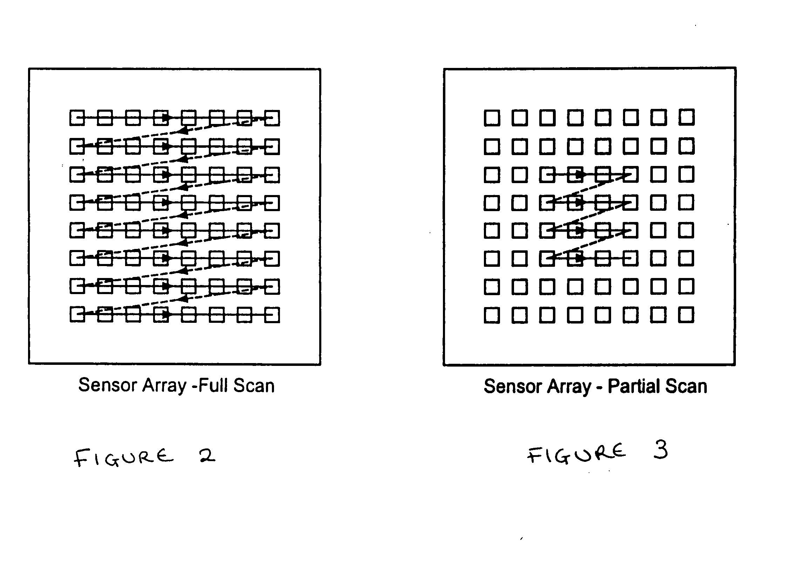

The controller 1, of the present invention, can select any of the plurality of sensing elements 5 for analysis at any one time. Consequently, a partial scan of the sensing array 3, which corresponds to a partial scan of the fingerprint, can be completed. A partial scan of the sensing array 3 is illustrated in figure 3.

The term "partial scan" is used in the present application to define the analysis of at least one sensing element 5. However, preferably a number of sensing elements 5 are selected for analysis at any one time, so that a significant number of ridges/troughs can be detected and thus an accurate determination of whether the partial scan image is focused or not can be achieved. More preferably, a partial scan is performed on a central region of the sensing array 3

The number of sensing elements 5 required for a partial scan depends on the number of sensing elements 5 in the sensing array 3 and the size of the sensing elements 5 relative to the size of the ridges/troughs to be detected.

Although the controller 1, of the present invention, is not limited to selecting all of the plurality of sensing elements 5 for analysis at any one time, the controller 1, of the present invention, is capable of selecting all of the plurality of sensing elements 5, as well as some of the plurality of sensing elements 5 for analysis at any one time.

Whilst figures 1 to 3 illustrate the sensing array 3 as comprising 64 sensing elements 5, the apparatus of the present invention is not limited to a sensing array 3 comprising 64 sensing elements 5. The sensing array 3 may comprises any number of sensing elements 5.

The size of each finger of a user may vary. Therefore, it is preferable that the sensing array 3 be larger than a finger which is placed in contact with a contact surface of a fingerprint sensing device. In this instance, the fingerprint sensing device of the present invention is able to obtain a full fingerprint scan using only some of the sensing elements 5.

If the fingerprint sensing device is a capacitance type fingerprint sensing device, then each sensing element 5 detects the capacitive coupling between the contact surface and the corresponding portion of the fingerprint. This capacitance is output as the output signal 13. Additionally, the controller 1 controls the charge/discharge time of the capacitor in the capacitively coupled sensing elements 5.

The output signal 13, from each activated sensing element 5 is input into the sensing circuit 7. A reference signal 15, generated by the controller 1, is also input into the sensing circuit 7. The reference signal 15 is generally a voltage, although some comparators (sensing circuit 7) may use a current reference signal 15. However, the present invention is not limited to the use of a voltage or current as a reference signal 15.

The sensing circuit 7 compares the output signal 13 with the reference signal 15. If the output signal 13 is greater than the reference signal 15, then the sensing element 5 is determined to be on. If the output signal 13 is less than the reference signal 15, then the sensing element 5 is determined to be off. If the output signal 13 and the reference signal 15 are equal, the sensing circuit 7 will resolve whether the sensing element 5 is determined to be on or off.

Depending on the type of fingerprint sensing device used, the sensing element 5 is on if the corresponding portion of the fingerprint comprises a ridge. Whereas the sensing element is off if the corresponding portion of the fingerprint comprises a trough. Alternatively, the sensing element 5 is off if the corresponding portion of the fingerprint comprises a ridge. Whereas the sensing element is on if the corresponding portion of the fingerprint comprises a trough.

The sensing circuit 7 outputs the result of the comparison 17, which indicates whether each selected sensing element 5 is on or off, to the controller 1. The controller 1 then assembles a partial fingerprint image from this data. The partial fingerprint image can then be automatically focused using a method of the present invention.

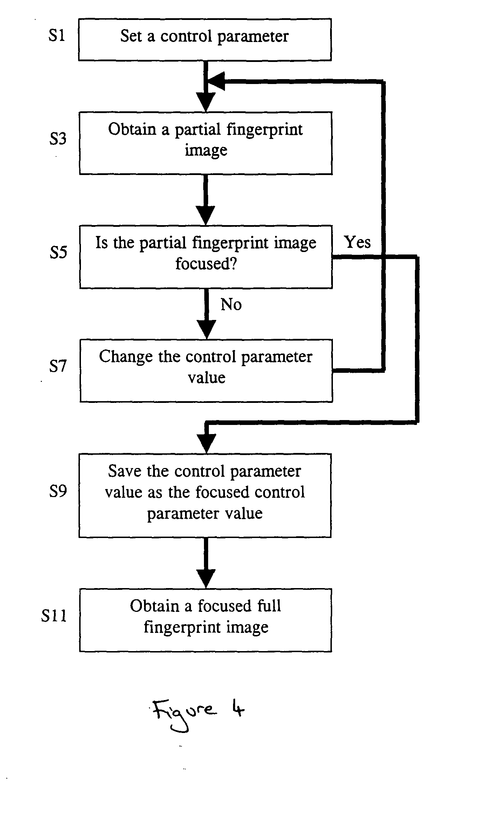

Figure 4 illustrates a method of the first embodiment of the present invention. At step S1, a control parameter, such as the reference signal used to distinguish between an on sensing element and an off sensing element, is set at an arbitrary value. A partial fingerprint image is then obtained by the fingerprint sensing device of the present invention, at step S3. Step S5 determines if the obtained partial fingerprint image is in focus.

If the obtained partial fingerprint image is not in focus, then the control parameter is changed, by one point in a direction that will improve the focus of the partial fingerprint image, at step S7. The method then returns to step S3, and another partial fingerprint image is obtained by the fingerprint sensing device, using the changed control parameter value. Steps S3 to S7 are repeated until the partial fingerprint image is determined to be in focus at step S5.

If the obtained partial fingerprint image is in focus, then the control parameter value which produced the focused partial fingerprint image is saved as the focused control parameter value, at step S9. Finally, at step S11, a focused full fingerprint image is obtained using the focused control parameter value.

The method of the first embodiment of the present invention enables a focused full fingerprint image to be obtained in a period of time which is shorter then methods known in the art. This is because the time required to obtain a partial fingerprint image is considerably shorter, than the time required to obtain a full fingerprint image. As a new image must be obtained each time the control parameter value is changed, to determine if the changed control parameter value produces a focused image, the time required to obtain the control parameter value which will produce a focused image is reduced. Consequently the time required to obtain a full focused fingerprint image is reduced.

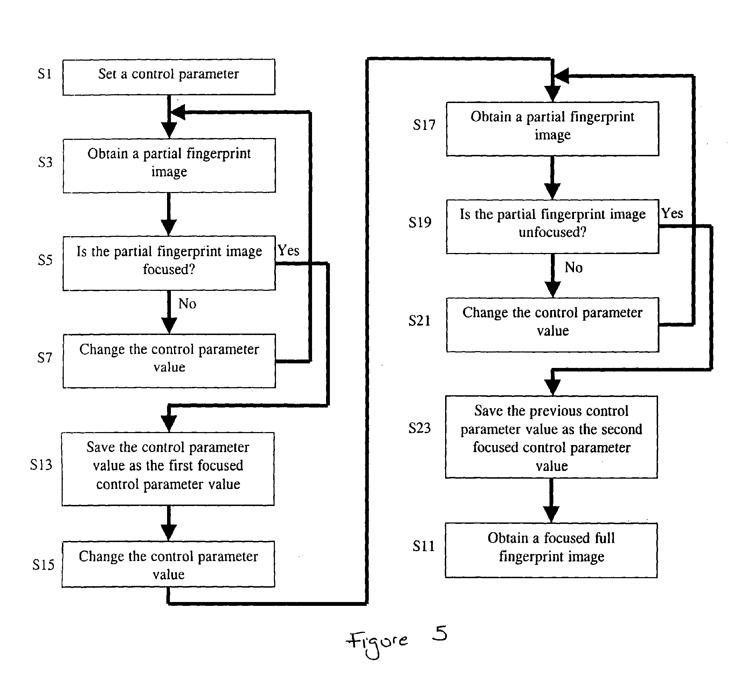

Figure 5 illustrates a method of a second embodiment of the present invention. Steps S1 to S7 are the same as steps S1 to S7 of the first embodiment of the present invention. The method of the second embodiment of the present invention differs from that of the first embodiment of the present invention, in that if the obtained partial fingerprint image is in focus, then the control parameter value which produced the focused partial fingerprint image is saved as the first focused control parameter value, at step S13.

The control parameter value is then changed, by one point, in a direction that will deteriorate the focus of the partial fingerprint image, at step S15. The direction in which the control parameter value is changed, is the same as the direction used in step S7 to improve the focus of the partial fingerprint image. A partial fingerprint image is then obtained by the fingerprint sensing device of the present invention, at step S17. At step S19, it is determined if the partial fingerprint image obtained at step S17 is out of focus.

If the obtained partial fingerprint image is in focus, then the control parameter is changed, by one point, in a direction that deteriorates the focus of the partial fingerprint image, at step S21. The method then returns to step S17, and another partial fingerprint image is obtained by the fingerprint sensing device, using the changed control parameter value. Steps S17 to S21 are repeated until the partial fingerprint image is determined to be out of focus at step S19.

If the obtained partial fingerprint image is determined to be out of focus at step S19, then the control parameter value prior to the control parameter value which produced the out of focus partial fingerprint image is saved as the second focused control parameter value, at step S23. Finally, at step S11, which is the same as step S11 in the first embodiment of the present invention, a focused full fingerprint image is obtained using the first and second focused control parameter values. Alternatively, any one of the control parameter values which fall between the first and second control parameter values can be set as a focused control parameter value and a focused full fingerprint image is obtained using the focused control parameter value. The first and second control parameter values are used as boundary control parameter values within which the fingerprint image is deemed to be focused.

Although the above method of present invention describes altering the focus of the partial fingerprint image by changing the value of the control parameter by one point in a direction that will improve the focus of the partial fingerprint image or by changing the value of the control parameter by one point, in a direction that deteriorates the focus of the partial fingerprint image, the present invention is not limited to this focusing method. For example, the value of the control parameter may be changed by more than one point at a time. Alternatively, two partial scans may be obtained using two different (predetermined) values of the control parameter, the resultant images may then be extrapolated linearly, or otherwise, so that the control parameter value which produces a focused image can be obtained.

Furthermore, a partial scan may be obtained for a number of predetermined values of the control parameter and the control parameter value which produces the most focused image used. Alternately, higher and lower type algorithms may be utilised. Two partial scans may be obtained using a higher value of the control parameter which defines an upper bound and a lower value of the control parameter which defines a lower bound. A partial scan may then be obtained using a control parameter value at the mid-point between the two bounds. The value of the mid-point control parameter can then be set as the new higher or lower bound and the step repeated until a focussed image is obtained.

Other methods of determining the value of the control parameter which produces a focused partial fingerprint image may also be utilised by the method and apparatus of the present invention. Additionally, the same or different methods of determining the value of the control parameter which produces a focused fingerprint image can be utilised in determining the value of the different control parameters.

Once the focused control parameter value or the first and second focused control parameter values has been identified, a tracking algorithm may be used to maintain focus whilst the focused full fingerprint image is being captured. Automatic tracking of the fingerprint whilst obtaining the focused full fingerprint image accommodates for changes in conditions whilst focused full fingerprint image is being obtained.

Further focusing techniques may also be applied to the focused full fingerprint image to further improve the quality of the image, if required.

Once a focused full fingerprint image has been obtained a bio-metric recognition algorithm may then be applied to the fingerprint image, to determine if the fingerprint is that of an authorised user or a non-authorised user.

Both methods of the first and second embodiments of the present invention determine if the partial fingerprint image is in focus, or out of focus, by examining the contrast between the on and off sensing elements 5. The greater the contrast between the on and off sensing elements 5, the more focused the image is determined to be.

Different techniques can be used to determine if the obtained image is in focus. Several of these techniques, which are known in the art, are:
i) measuring the percentage of on sensing elements in the fingerprint image;
ii) applying a filter to the fingerprint image to highlight the lines in the fingerprint image, and then measuring the percentage of on sensing elements in the fingerprint image; or
iii) applying a filter to reduce noise from the fingerprint image, and then measuring the percentage of on sensing elements in the fingerprint image.

Several electronic apparatuses using the above fingerprint sensing device and method will now be described.

Figure 6 illustrates a schematic view of a mobile personal computer incorporating a method and apparatus of the present invention. The personal computer 1100 comprises a body 1104 including a keyboard 1102 and a display unit 100. A fingerprint sensing device of the present invention may be incorporated into the display unit 100 of the mobile personal computer or may be a separate unit.

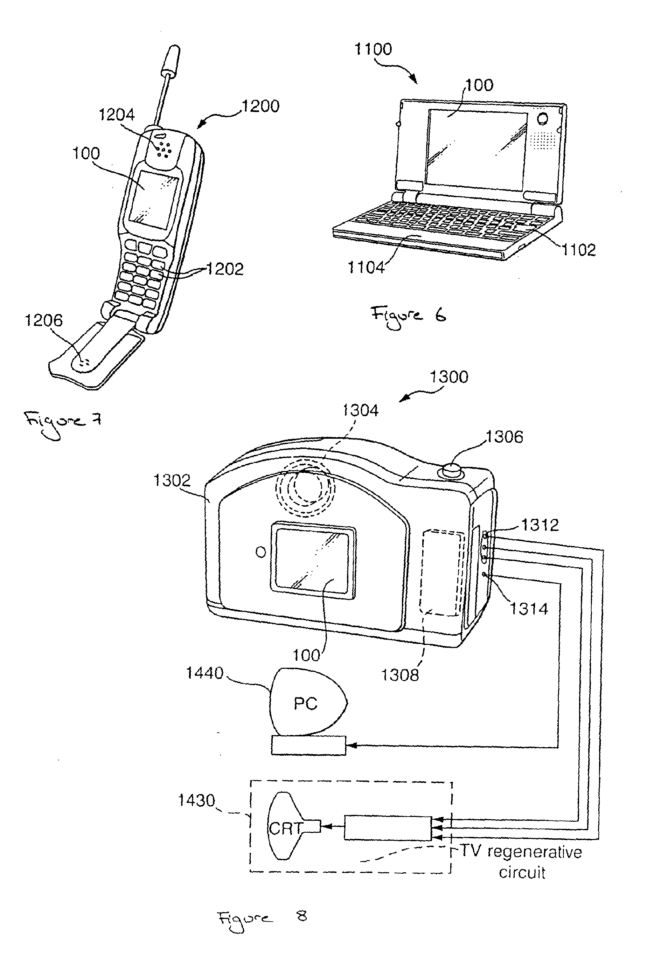

Figure 7 illustrates a schematic view of a mobile telephone incorporating a method and apparatus of the present invention. The portable telephone 1200 comprises a plurality of operation keys 1202, an earpiece 1204, a mouthpiece 1206, and a display panel 100. A fingerprint sensing device of the present invention may be incorporated into the display panel 100 of the mobile telephone or may be a separate unit.

Figure 8 illustrates a schematic view of a digital camera incorporating a method and apparatus of the present invention, having connections to external devices. The digital still camera 1300 generates imaging signals from an optical image of an object by photoelectric conversion using, for example, a charge coupled device (CCD). The digital still camera 1300 comprises a display panel 100 at the back face of a case 1302 to perform display based on the imaging signals from the CCD. Thus, the display panel 100 functions as a finder for displaying the object. A photo acceptance unit 1304 including optical lenses and the CCD is provided at the front side (behind in the drawing) of the case 1302. A fingerprint sensing device of the present invention may be incorporated into the display unit 100 of the digital camera or may be a separate unit.

When a cameraman determines the object image displayed in the display panel 100 and releases the shutter, the image signals from the CCD are transmitted and stored to memories in a circuit board 1308. In the digital still camera 1300, video signal output terminals 1312 and input/output terminals 1314 for data communication are provided on a side of the case 1302. As shown in the drawing, a television monitor 1430 and a personal computer 1440 are connected to the video signal terminals 1312 and the input/output terminals 1314, respectively, if necessary. The imaging signals stored in the memories of the circuit board 1308 are output to the television monitor 1430 and the personal computer 1440, by a given operation.

Examples of electronic apparatuses, other than the personal computer shown in figure 6, the portable phone shown in figure 7, and the digital still camera shown in figure 8, include, view-finder-type and monitoring-type video tape recorders, car navigation systems, pagers, electronic notebooks, portable calculators, word processors, workstations, TV telephones, point-of-sales system (POS) terminals, and devices provided with touch panels.

The aforegoing description has been given by way of example only and it will be appreciated by a person skilled in the art that modifications can be made without departing from the scope of the present invention.

## Claims

1. A method of focusing a fingerprint image obtained by a fingerprint sensing device, said fingerprint sensing device comprising a sensing array having a plurality of sensing elements, said method comprising:
(a) obtaining a partial fingerprint image;
(b) adjusting a control parameter value to obtain a focused partial fingerprint image;
(c) setting said adjusted focused control parameter value as a focused control parameter value; and
(d) obtaining a focused full fingerprint image.

2. A method of focusing a fingerprint image according to claim 1, wherein step (a) further comprises:
(a)(i) selecting at least one, but not all, of said plurality of sensing elements to form said partial fingerprint image.

3. A method of focusing a fingerprint image according to claim 1 or claim 2, wherein step (d) further comprises:
(d)(i) selecting all of said plurality of sensing elements to form said focused full fingerprint image.

4. A method of focusing a fingerprint image according to any one of claims 1 to 3, wherein the step (c) further comprises:
(c)(i) adjusting said control parameter value to obtain an unfocused partial fingerprint image;
(c)(ii) setting said control parameter value prior to said adjusted unfocused control parameter value as a second focused control parameter value, wherein said focused control parameter value and said second focused control parameter value are boundary control parameter values within which said fingerprint image is focused.

5. A method of focusing a fingerprint image according to any one of claims 1 to 4, wherein step (b) further comprises:
(b)(i) adjusting one of a plurality of control parameter values.

6. A method of focusing a fingerprint image according to claim 5, wherein only one of said plurality of control parameter values is adjusted at a time.

7. A method of focusing a fingerprint image according to any one of claims 1 to 6, wherein said control parameter value is a reference signal.

8. A method of focusing a fingerprint image according to any one of claims 1 to 7, wherein said control parameter value is a charging/discharging time of a capacitor in said sensing element of said sensing array.

9. A fingerprint sensing device comprising:
a sensing array having a plurality of sensing elements, said sensing array for detecting ridges and troughs of a fingerprint located on a contact surface of said sensing array;
a controller coupled to said sensing array, said controller being capable of selecting at least one of said plurality of sensing elements to form a partial fingerprint image; and
a sensing circuit coupled to said sensing array and said controller, said sensing circuit for determining if said selected sensing element or elements are on or off.

10. A fingerprint sensing device according to claim 9, wherein said plurality of sensing elements form a matrix of sensing elements.

11. A fingerprint sensing device according to claim 9 or claim 10, wherein said selected one of said plurality of sensing elements is arranged to issue an output signal to said sensing circuit.

12. A fingerprint sensing device according to claim 11, wherein said controller is arranged to generate a reference signal.

13. A fingerprint sensing device according to claim 12, wherein said sensing circuit is arranged to compare said output signal with said reference signal.

14. A fingerprint sensing device according to claim 13, wherein if said output signal is greater than said reference signal, then said sensing element is on and wherein if said output signal is less than said reference signal, then said sensing element is off.

15. A fingerprint sensing device according to claim 14, wherein if said sensing element is on, then said sensing element is detecting a trough and wherein if said sensing element is off, then said sensing element is detecting a ridge.

16. A fingerprint sensing device according to claim 14, wherein if said sensing element is off, then said sensing element is detecting a trough and wherein if said sensing element is on, then said sensing element is detecting a ridge.

17. A fingerprint sensing device according to claim 15 or claim 16, wherein said controller is capable of selecting a plurality of sensing elements to form a full fingerprint image.

18. A fingerprint sensing device according to any one of claim 9 to 17, wherein said fingerprint sensing device is a thin film transistor (TFT) type fingerprint sensing device.

19. A fingerprint sensing device according to any one of claim 9 to 17, wherein said fingerprint sensing device is a capacitance type fingerprint sensing device.

20. A fingerprint sensing device according to claim 19, wherein said sensing element detects a capacitive coupling between said ridge or said trough of said fingerprint and said contact surface.

21. A fingerprint sensing device according to claim 19, wherein said controller is arranged to control the charge/discharge time of a capacitor in said sensing element.
